# DEMANDE DE BREVET EUROPEEN

(11) **EP 1 032 180 A1**
(43) Date de publication de la demande: **30.08.2000**
(21) Numéro de dépôt: 00200525.4
(22) Date de dépôt: 16.02.2000
(51) Int. Cl.: H04M 1/02

(54) **Appareil électronique combiné à afficheur variable**

(30) Priorité: 26.02.1999 FR 9902458
(71) Demandeur: Koninklijke Philips Electronics N.V., 5621 BA Eindhoven (NL)
(72) Inventeur: Vizier, Franck, 75008 Paris (FR)
(74) Mandataire: Chaffraix, Jean

(57) **Abrégé**

Appareil électronique sans fil (10) possédant une face principale munie de moyens de liaison avec un utilisateur, tels qu'un clavier de touches (4) et un afficheur (5), le clavier étant constitué par une partie de boîtier (7) munie d'ouvertures (8) pour des touches (6) en relation élastique avec une plaque de fond (9) de laquelle partent les touches (6) qui traversent lesdites ouvertures.

Selon l'invention, ladite partie de boîtier (7) munie d'ouvertures (8) et ladite plaque de fond (9) munie de touches (6) sont solidaires de façon à constituer un volet (11), ledit volet étant monté manoeuvrable entre deux positions, une première position protectrice et opérationnelle dans laquelle les touches sont placées au-dessus d'une partie de l'afficheur (5) constitué par un écran tactile, position dans laquelle ledit appareil procure un premier groupe de fonctions et une deuxième position non protectrice et non opérationnelle dans laquelle il est dégagé dudit écran tactile (5), position dans laquelle ledit appareil procure un deuxième groupe de fonctions.

Applications : téléphone mobile ; organiseur personnel.

## Description

La présente invention concerne un appareil électronique sans fil possédant une face principale munie de moyens de liaison avec un utilisateur, tels qu'un clavier de touches et un afficheur, le clavier étant constitué par une partie de boîtier munie d'ouvertures pour des touches en relation élastique avec une plaque de fond de laquelle partent les touches qui traversent lesdites ouvertures.

Des appareils électroniques, mobiles notamment, subissent une miniaturisation de plus en plus poussée et peuvent tenir dans la main désormais, tels des calculatrices, des récepteurs d'appel, des organiseurs et autres appareils de calcul ou de communication comme des téléphones sans fil. En liaison avec les perfectionnements apportés aux circuits intégrés qui deviennent toujours plus petits et plus performants à la fois, il est maintenant possible d'envisager la réalisation en un seul boîtier de deux ou plusieurs des appareils précités tel que, par exemple: un téléphone mobile multi-standards, ou la combinaison d'un téléphone mobile et d'un organiseur. La réunion en un seul de deux appareils munis l'un et l'autre d'un clavier de touches et d'un afficheur peut poser le problème technique que l'un des deux appareils nécessite un afficheur de taille réduite, comme c'est le cas pour un téléphone mobile ou une calculette par exemple, où la surface du clavier est typiquement supérieure à celle de l'afficheur, alors que l'autre appareil doit présenter des caractéristiques techniques inverses, c'est-à-dire un assez grand afficheur pour un clavier réduit, tel qu'un organiseur notamment.

Une solution à ce problème technique est décrite dans la demande de brevet européen EP-A 0 472 361; il s'agit d'un poste de travail électronique portable composé d'un ordinateur personnel et d'un téléphone mobile, en une seule et même structure. Cet appareil comporte une partie de davier pivotante qui permet de passer d'un clavier de téléphone mobile à un clavier d'ordinateur personnel, changement qui s'accompagne du passage d'un petit afficheur à un grand afficheur. Dans ce but, la partie pivotante comporte des touches sur ses deux faces, ceci impliquant que cette partie mobile est active et constitue un appareil électronique en soi, possédant son propre boîtier constitué de deux demi-coquilles à quoi s'ajoute le problème de raccordement électrique entre cette partie pivotante et le reste de l'appareil. En conséquence, cette solution nuit à la simplification et à la miniaturisation de l'appareil qui est épais en position repliée du clavier mobile, étant donnée la trop grande épaisseur de ce clavier, d'ailleurs double-face.

Le but principal de l'invention est de réaliser de façon simple un appareil électronique sans fil miniaturisé qui puisse répondre à plusieurs types d'utilisations différentes nécessitant des tailles de clavier et d'afficheur différentes.

Ce but est atteint et les inconvénients de l'art antérieur sont atténués grâce au fait que l'appareil électronique sans fil indiqué au premier paragraphe est remarquable en ce que ladite partie de boîtier munie d'ouvertures et ladite plaque de fond munie de touches sont solidaires de façon à constituer un volet, ledit volet étant monté manoeuvrable entre deux positions, une première position protectrice et opérationnelle dans laquelle les touches sont placées au-dessus d'une partie de l'afficheur constitué par un écran tactile, position dans laquelle ledit appareil procure un premier groupe de fonctions et une deuxième position non protectrice et non opérationnelle dans laquelle il est dégagé dudit écran tactile, position dans laquelle ledit appareil procure un deuxième groupe de fonctions.

De préférence, ledit volet est obtenu par moulage en un seul élément en deux parties, en deux phases successives et à partir de plastiques différents. Par exemple, la partie de boîtier munie d'ouvertures a été moulée dans une première phase en un plastique mécaniquement résistant puis la plaque de fond a été moulée dans une deuxième phase en un plastique élastique.

Un mode de réalisation préféré de l'invention est remarquable en ce que lorsque ledit volet se trouve dans la première position protectrice et opérationnelle le premier groupe de fonctions procurées est celui d'un téléphone mobile et en ce que lorsque le volet se trouve dans la deuxième position non protectrice et non opérationnelle, le deuxième groupe de fonctions est celui d'un organiseur. Dans la première position, l'appareil comporte un grand clavier et un afficheur réduit, ce qui convient bien pour des fonctions de téléphonie par voie hertzienne, alors que, dans la deuxième position, le clavier réduit et un grand écran sont bien adaptés aux fonctions d'un organiseur.

Le volet peut être monté à coulissement au-dessus de la face principale, ce qui est facilité par le fait que ce volet est passif en ce sens que les touches de clavier qu'il supporte ont une fonction purement mécanique, et qu'aucun raccordement électrique avec la partie principale de l'appareil n'est à prévoir.

Selon un mode de réalisation préféré de l'invention le volet est monté à pivotement autour d'un axe qui s'étend sensiblement le long d'un bord de l'afficheur, un bord inférieur de préférence, de façon que dans la première position il soit replié au-dessus et à fleur de la face principale et que dans la deuxième position il soit déplié de sorte que toute la face principale soit découverte.

En outre, on peut prévoir que l'appareil selon l'invention comporte des moyens d'établissement d'un contact électrique et d'immobilisation du volet lorsque le volet se trouve dans sa première position protectrice et opérationnelle.

La description qui suit en regard des dessins annexés, le tout donné à titre d'exemple non limitatif, fera bien comprendre comment l'invention peut être réalisée.
Les figures 1A à 1D montrent un premier mode de réalisation de l'appareil selon l'invention : aux figures 1A et 1B le volet est dans sa première position protectrice et opérationnelle, l'appareil étant vu en plan sur la figure 1A et de profil sur la figure 1B. Aux figures 1C et 1D le volet est dans sa deuxième position non protectrice et non opérationnelle, selon le même mode de représentation qu'aux figures 1A et 1B respectivement.
La figure 2 représente en coupe avec arrachement la constitution du volet à l'endroit d'une ouverture traversée par une touche.
Les figures 3A à 3D sont homologues des figures 1A à 1D respectivement pour un deuxième mode de réalisation de l'appareil selon l'invention.
La figure 4 représente en A vus en coupe et de profil et en B vus de face des moyens d'établissement d'un contact électrique et d'immobilisation du volet dans la première position.

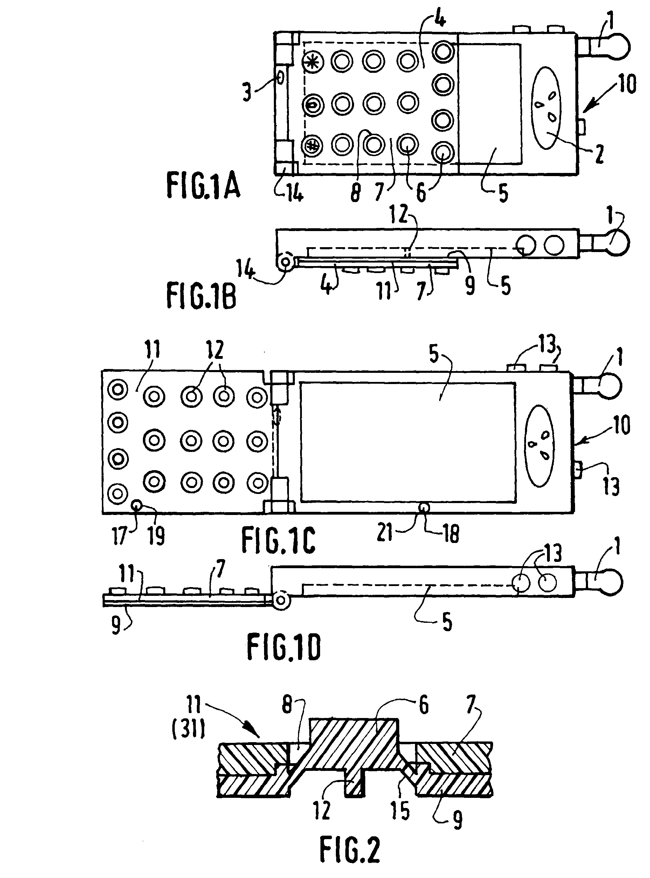

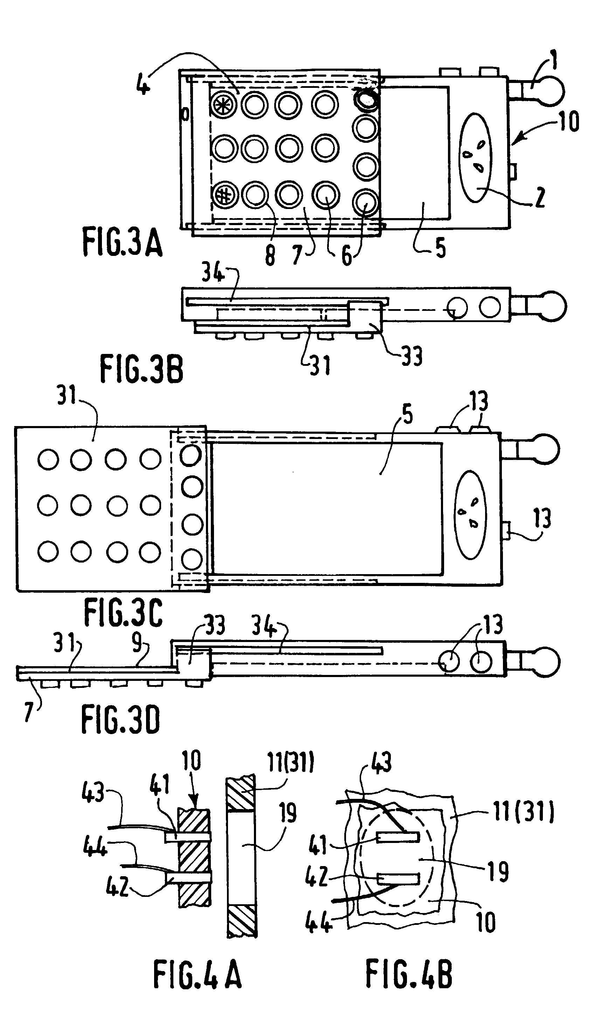

L'appareil représenté en 10 sur les figures 1A et 1C a l'apparence et les fonctionnalités d'un téléphone mobile (cellulaire ou sans fil) classique. Sur une face principale, figure 1A, il comporte une antenne 1 et des moyens de liaison avec un utilisateur, tels qu'un écouteur 2, un microphone 3, un clavier de touches 4 et un afficheur 5 qui est de préférence un dispositif d'affichage à cristaux liquides dit LCD. De façon connue le clavier 4 comporte 16 touches telles que 6, une partie étant réservée à la numérotation, soit les 10 chiffres ainsi que les touches étoile et dièse, à la partie gauche, dite encore "partie basse" dans la suite du texte. A la partie haute du clavier 4 figure une rangée de 4 touches qui sont nécessaires pour l'utilisation d'un téléphone mobile; la consultation du menu, notamment. D'autres touches qui n'appartiennent généralement pas au clavier, tel le bouton marche-arrêt ou la commande de volume de l'écouteur n'ont pas été représentées.

On notera que le clavier 4 est constitué par une partie de boîtier 7 munie d'ouvertures 8 dans lesquelles peuvent être enfoncées les touches 6. De préférence, les touches 6 sont en relation élastique avec une plaque de fond 9. En outre, la partie de boîtier munie d'ouvertures 8 et la plaque de fond 9 munie des touches 6 sont solidaires de façon à constituer un volet manoeuvrable référencé 11. Pour le mode de réalisation de la figure 1, le volet 11 est monté à pivotement autour d'une charnière 14. Sur les figure 1A et 1B le volet 11 se trouve dans sa position protectrice et opérationnelle en vue de l'actionnement d'un téléphone mobile; à cet effet, les touches 6 sont placées au-dessus (en regard) d'une partie basse de l'écran 5 qui a la propriété d'être tactile, c'est-à-dire qu'elle répond à l'appui sur n'importe quelle touche 6 du fait que par cette action, un doigt 12 (figure 1B) est amené au contact avec pression contre l'écran 5, à l'endroit prédéterminé pour la réalisation de la fonction indiquée sur la touche 6 qui supporte le doigt 12 à son revers. La position opérationnelle du volet 11 est dite aussi protectrice du fait que le volet protège alors la partie basse (tactile) de l'écran 5, ne laissant apparaître que la partie haute suffisante pour la réalisation de fonctions de téléphonie mobile.

Sur les figures 1C et 1D par contre, le volet 11 a été pivoté de 180 degrés, ce qui l'a amené dans sa position non protectrice et non opérationnelle qui laisse l'écran 5 entièrement découvert; ce grand écran convient pour des fonctions d'organiseur personnel et aussi, au moyen de l'antenne 1, pour la réception et l'émission de données, ce qui donne accès à un groupe de fonctionnalités autres que celles d'un téléphone mobile, telles que facsimilé, courrier électronique et accès au réseau Internet notamment.

Le changement de fonctionnalités de l'appareil lors du passage de la première position à la deuxième position du volet 11 peut être obtenu soit de façon automatique, par tout moyen connu, par action électromécanique du volet par rapport à l'écran, lors de se manoeuvre, soit manuellement au moyen d'une touche (non représentée) solidaire de l'appareil à un endroit autre que sur le volet. On notera que dans la deuxième position des figures 1C et 1D le volet 11 est entièrement passif: il peut être réalisé intégralement en matière plastique; il ne sert alors plus comme clavier et pourraît être démonté sans altérer le fonctionnement de l'appareil muni de son grand écran. Pour son fonctionnement en organiseur personnel notamment, l'appareil comporte par exemple sur ses bords latéraux des touches telles que 13.

Un mode de réalisation préféré du volet 11 est représenté à la figure 2. La partie 7, munie d'ouvertures 8 est avantageusement réalisée en un plastique mécaniquement résistant et la plaque de fond 9 munie de touches 6 en un plastique élastique; la touche 6 est reliée à sa plaque support 9 par une partie tronconique 15 qui procure un effet de seuil relativement à la force à exercer lors de l'enfoncement de la touche avec une distance d'enfoncement suffisante pour le doigt 12, jusqu'au contact avec l'écran 5. De préférence, le volet il est réalisé par moulage par injection en un seul élément en deux parties, en deux phases successives. Pour plus de détails sur cette technique de réalisation du volet, on peut se reporter au brevet GB-A 2 251 529.

Il est aussi possible de réaliser les deux parties 7 et 9 séparément par moulage, puis de les assembler par collage.

Les figures 3A à 3D représentent un autre mode de réalisation de l'invention. Dans ce cas le volet, référencé 31 n'est pas pivotant mais coulissant, le passage de l'une à l'autre position s'effectuant par translation. A cet effet le volet est muni de deux oreilles latérales 33 dont l'extrémité libre est repliée à angle droit pour s'insérer à coulissement dans des rainures 34 pratiquées dans les bords latéraux de l'appareil. On notera que les rainures 34 ne débouchent pas vers le haut ni vers le bas de façon que leurs extrémités créent une butée pour maintenir le volet dans sa première position opérationnelle ou sa deuxième position passive. A ce détail mécanique près, ce qui est décrit plus haut relativement au premier mode de réalisation reste valable pour le mode de réalisation de la figure 3.

Comme représenté sur la figure 1C, l'appareil selon l'invention comporte, avantageusement, des moyens d'établissement d'un contact électrique et d'immobilisation du volet 11 (respectivement 31), moyens référencés 17 sur le volet et 18 sur la face principale de l'appareil. La référence 17 peut désigner un doigt en matière plastique qui actionne un commutateur électrique dans un orifice 18 lorsque le volet est replié contre la face principale; la commutation, par ouverture ou fermeture d'un circuit électrique, réalise le passage désiré du deuxième groupe de fonctions au premier groupe de fonctions de l'appareil.

Les fonctions électromécaniques décrites au paragraphe précédent peuvent aussi être réalisées comme décrit ci-dessous en référence à la figure 4.

Sur la figure 4 est représentée une fraction du volet 11 (respectivement 31) munie d'un aimant 19. En regard figure une pièce magnétique 21 de l'appareil 10 qui se décompose en deux plots 41 et 42, reliés chacun à un conducteur électrique 43, 44, à l'intérieur de l'appareil. Lorsque l'aimant 19 arrive au contact des plots 41 et 42, il assure le verrouillage souhaité et il réalise en même temps une liaison électrique entre les conducteurs 43 et 44, ce qui induit, dans l'appareil 10, une polarisation ou le passage d'un courant électrique qui entraîne à son tour le changement du type de fonctionnement de l'appareil.

L'écran LCD 5 des figures 1 et 3 comporte une partie basse tactile qui peut être du type résistif ou capacitif notamment. Pour ce qui est de la plaque de fond 9, qui est réalisée de préférence en un élastomère, elle est avantageusement fabriquée en une seule nappe supportant les touches 6 mais elle pourrait aussi consister en un ensemble de parties séparées supportant chacune une touche 6, ces parties étant moulées ou collées contre la partie de boîtier 7 munie d'ouvertures 8.

## Revendications

1. Appareil électronique sans fil possédant une face principale munie de moyens de liaison avec un utilisateur, tels qu'un clavier de touches (4) et un afficheur (5), le clavier étant constitué par une partie de boîtier (7) munie d'ouvertures (8) pour des touches (6) en relation élastique avec une plaque de fond (9) de laquelle partent les touches (6) qui traversent lesdites ouvertures (8), caractérisé en ce que
ladite partie de boîtier (7) munie d'ouvertures (8) et ladite plaque de fond (9) munie de touches (6) sont solidaires de façon à constituer un volet (11, 31), ledit volet étant monté manoeuvrable entre deux positions, une première position protectrice et opérationnelle dans laquelle les touches sont placées au-dessus d'une partie de l'afficheur (5) constitué par un écran tactile, position dans laquelle ledit appareil procure un premier groupe de fonctions et une deuxième position non protectrice et non opérationnelle dans laquelle il est dégagé dudit écran tactile, position dans laquelle ledit appareil procure un deuxième groupe de fonctions.

2. Appareil électronique selon la revendication 1, caractérisé en ce que ledit volet (11) constitué par ladite partie de boîtier (7) munie d'ouvertures (8) et ladite plaque de fond (9) munie de touches (6) a été moulé en un seul élément en deux parties, en deux phases successives et à partir de plastiques différents.

3. Appareil électronique selon la revendication 2, caractérisé en ce que ladite partie de boîtier (7) munie d'ouvertures (8) a été moulée dans une première phase en un plastique mécaniquement résistant (7, 8) et la plaque de fond (9) a été moulée dans une deuxième phase en un plastique élastique (6, 9).

4. Appareil électronique selon la revendication 1 ou 2, caractérisé en ce que ledit volet (11) a été obtenu par collage de ladite plaque de fond (9) munie de touches contre ladite partie de boîtier (7) munie d'ouvertures.

5. Appareil électronique selon l'une des revendications 1 à 4, caractérisé en ce que lorsque ledit volet (11) se trouve dans ladite première position protectrice et opérationnelle, ledit premier groupe de fonctions procurées est celui d'un téléphone mobile, de type cellulaire ou sans fil, et en ce que lorsque ledit volet se trouve dans ladite deuxième position non protectrice et non opérationnelle, ledit deuxième groupe de fonctions est celui d'un organiseur.

6. Appareil électronique selon l'une des revendications 1 à 5, caractérisé en ce que ledit volet (31) est monté à coulissement sur ladite face principale de façon que dans ladite première position il soit, en butée avant, entièrement engagé au-dessus de ladite face principale et que dans ladite deuxième position il soit, en butée arrière, presque entièrement dégagé de ladite face principale.

7. Appareil électronique selon l'une des revendications 1 à 5, caractérisé en ce que ledit volet (11) est monté à pivotement autour d'un axe (14) qui s'étend sensiblement le long d'un bord dudit afficheur (5), de façon que dans ladite première position il soit replié au-dessus de ladite face principale et que dans ladite deuxième position il soit déplié de sorte que l'essentiel de ladite face principale soit découverte.

8. Appareil électronique selon l'une des revendications précédentes, caractérisé en ce qu'il comporte des moyens d'établissement d'un contact électrique et d'immobilisation (17,18 - 19,21) dudit volet lorsque le volet (11, 31) se trouve dans sa première position protectrice et opérationnelle.

9. Volet (11, 31) manoeuvrable pour un appareil électronique sans fil selon l'une des revendications 1 à 8, caractérisé en ce qu'il est entièrement réalisé en matière plastique, à une seule épaisseur de paroi.
